# EUROPEAN PATENT APPLICATION

(11) **EP 2 685 614 A1**
(43) Date of publication of application: **15.01.2014**
(21) Application number: 12755016.8
(22) Date of filing: 21.02.2012
(51) Int. Cl.: H02K 5/22, H02K 3/50

(54) **MOTOR**

(30) Priority: 08.03.2011 JP 2011050310
(71) Applicant: Yamaha Motor Electronics Co., Ltd., Shuchi-gun Shizuoka 437-0292 (JP)
(72) Inventor: OOTANI, Toshihide, Shuchi-gun Shizuoka 437-0292 (JP); NAGATA, Toshihiko, Shuchi-gun Shizuoka 437-0292 (JP)
(74) Representative: Zimmermann, Tankred Klaus
(86) International application number: PCT/JP2012/054090
(87) International publication number: WO 2012/121002

(57) **Abstract**

A motor 1 includes a rotating shaft 2, a rotor 3, a stator 4, and a housing 5 for accommodating the rotating shaft 2, the rotor 3, and the stator 4. The stator 4 includes a tubular stator core 6 located around the rotor 3, a coil 7 formed by a winding wire 9 wound around the stator core 6, and a substantially annular connecting plate 10 connected to the winding wire 9 and a power supply line. The connecting plate 10 is located below the rotor 3. At a top side of the housing 5, a first opening 5c having an inner diameter equal to or larger than an outer diameter of the stator 4 is formed. A maximum value of an outer diameter of the connecting plate 10 is equal to or smaller than an outer diameter of the stator core 6.

## Description

### Technical Field

The present invention relates to a motor including a connecting plate that connects each of the coils therein to a prescribed phase.

### Background Art

Conventionally, a motor including a connecting plate for connecting each of the coils to a prescribed phase, such as a brushless DC motor or the like, is known (see, for example, Patent Literature 1). Such a connecting plate is connected to each of the coils and to a power supply line, and an electric current is supplied from the power supply line to each of the coils via the connecting plate. In order to stably supply the electric current of a prescribed amount from the power supply line to each of the coils, the connecting plate needs to have a prescribed current capacity (prescribed passage area for the current).

A conceivable technique for allowing the connecting plate to have a sufficient current capacity with certainty is to increase the thickness of the connecting plate or to increase the surface area of the connecting plate.

However, when the thickness of the connecting plate is increased, the size of the motor in an axial direction is increased. In the case where the connecting plates for a plurality of phases (e.g., U phase, V phase, W phase) are stacked, the increased thickness of all of the connecting plates is not negligible. An increase in the thickness of the connecting plate is a factor for enlarging the size of the motor in the axial direction.

Usually for assembling a motor, a stator including the connecting plate is attached to a housing, and then a rotor is inserted into the stator through a hole of the connecting plate. An inner diameter of the hole of the connecting plate needs to be larger than an outer diameter of the rotor. Therefore, there is a limit in decreasing the inner diameter of the connecting plate. Thus, it is difficult to increase the surface area of the connecting plate by decreasing the inner diameter of the hole.

In this situation, it is conceivable to increase an outer diameter of the connecting plate to increase the current capacity of the connecting plate.

### Citation List

### Patent Literature

Patent Literature 1: JP 2002-281704 A

### Summary of Invention

### Technical Problem

However, when the outer diameter of the connecting plate is increased, the housing also needs to be enlarged. This inevitably increases the size of the motor in a radial direction.

The present invention made in light of the above-described situation has an object of providing a motor that obtains a sufficient current capacity of a connecting plate with certainty without being enlarged.

### Solution to Problem

A motor according to the present invention includes a rotating shaft; a rotor secured to the rotating shaft; a stator including a tubular stator core located around the rotor, a coil formed by a winding wire wound around the stator core, and a substantially annular connecting plate located on one side with respect to the stator core in an axial direction of the rotating shaft and connected to a power supply line for supplying an electric current to the winding wire; and a housing for accommodating the rotating shaft, the rotor, and the stator, the housing including a first opening on the opposite side to the connecting plate in the axial direction of the rotating shaft, the first opening having an inner diameter equal to or larger than an outer diameter of the stator. A maximum value of an outer diameter of the connecting plate is equal to or smaller than an outer diameter of the stator core.

### Advantageous Effect of Invention

According to the present invention, a motor capable of obtaining a sufficient current capacity of a connecting plate with certainty without being enlarged can be provided.

### Brief Description of Drawings

FIG. 1 is a cross-sectional view of a motor.
FIG. 2 is a front view of a connecting plate.
FIG. 3(a) is a partial cross-sectional view of the connecting plate; FIG. 3(b) is a view of a terminal as seen in a direction of B in FIG. 3(a); and FIG. 3(c) is a view of the terminal as seen in a direction of C in FIG. 3(a).

### Description of Embodiments

Hereinafter, an embodiment of the present invention will be described. A motor according to the present embodiment is preferably usable as an assisting power source of, for example, an electric assist bicycle. Nonetheless, the motor according to the present invention is not specifically limited regarding the use thereof, and may be usable for other uses, needless to say.

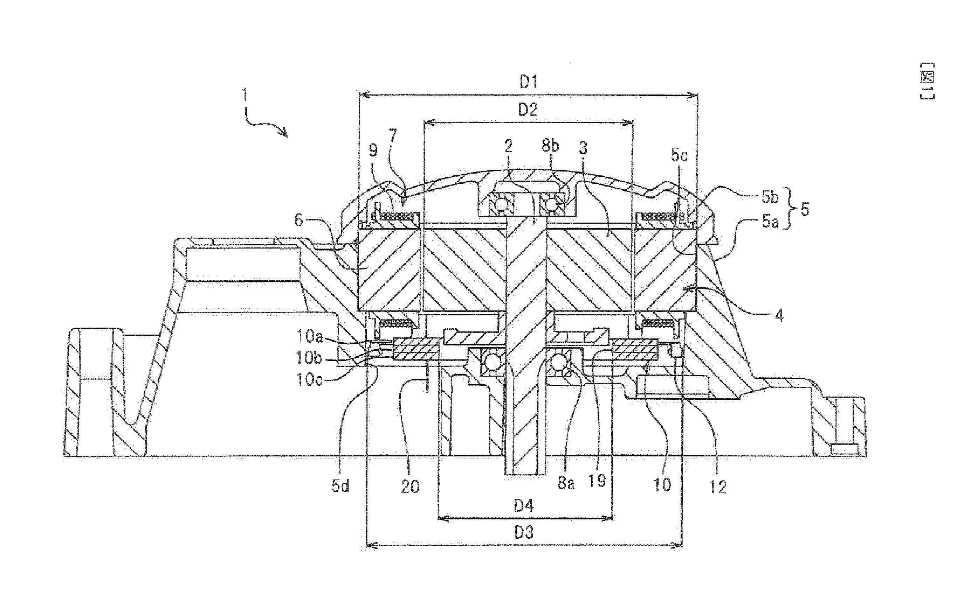

As shown in FIG. 1, a motor 1 includes a rotating shaft 2, a rotor 3 secured to the rotating shaft 2, a stator 4, and a housing 5 for accommodating the rotating shaft 2, the rotor 3, and the stator 4. FIG. 1 does not show inner structures of the stator 4 and the like in detail.

In the following description, the term "top", "bottom", "left", and "right" do not indicate the directions as seen from a rider of an electric assist bicycle, but indicate the top, bottom, left, and right of FIG. 1. The directions in the following description are used for explanation and are not related to the orientation in which the motor 1 is actually used. There is no specific limitation on the orientation in which the motor 1 is used.

The housing 5 includes a housing main body 5a located in a bottom portion and a cover 5b located in a top portion. The housing main body 5a includes a first opening 5c in a top portion thereof, and the cover 5b covers the first opening 5c.

The rotating shaft 2 extends downward. The rotating shaft 2 is rotatably supported by a bearing 8a attached to the housing main body 5a and a bearing 8b attached to the cover 5b. The rotating shaft 2 is configured to transmit a driving force to a chain (not shown) of the electric assist bicycle via a gear, a sprocket and the like (not shown).

The rotor 3 is cylindrical, and the rotating shaft 2 is secured to an inner surface of the rotor 3. The rotating shaft 2 rotates together with the rotor 3.

The stator 4 includes a cylindrical stator core 6 located around the rotor 3, a coil 7 formed by a winding wire 9 wound around the stator core 6, and connecting plates 10. The motor 1 is a three-phase brushless DC motor. A connecting plate 10a for a U phase, a connecting plate 10b for a V phase, and a connecting plate 10c for a W phase are stacked in this order from top to bottom. The connecting plates 10a, 10b, and 10c are insert-molded by use of a resin. Herein, the three-phase connecting plates 10a, 10b, and 10c will be collectively referred to as the "connecting plates 10" for the sake of convenience.

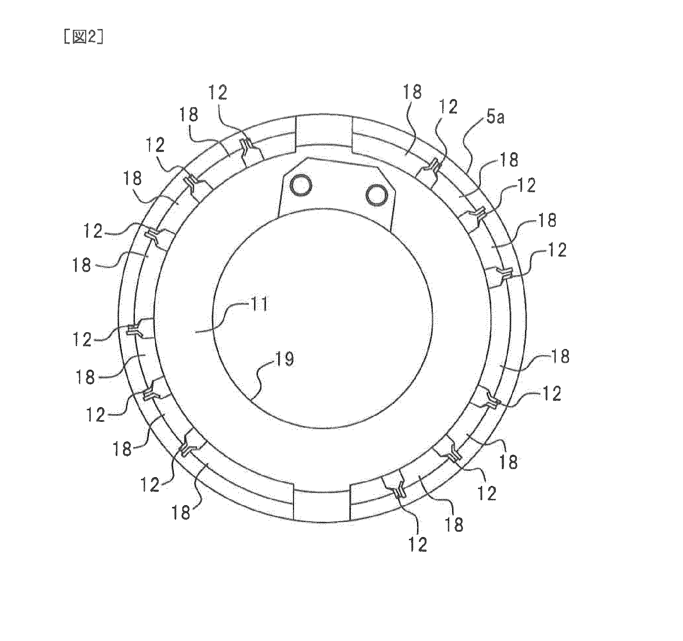

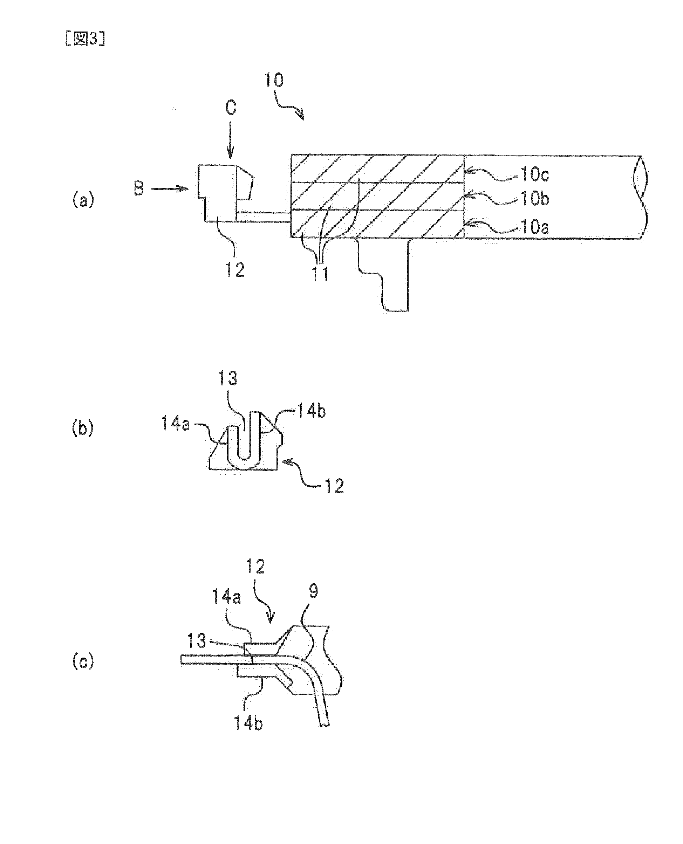

As shown in FIG. 2 and FIG. 3(a), the connecting plates 10a, 10b and 10c each include an annular body 11 and terminals 12 provided outward, in a radial direction, of the annular body 11. The annular body 11 includes an inner hole 19. The annular bodies 11 of the connecting plates 10a, 10b, and 10c are stacked from top to bottom to define a stacked body. The connecting plates 10a, 10b, and 10c each include a plurality of terminals 12. Although not shown, the terminals 12 of the connecting plates 10a, 10b, and 10c are structured to have an identical height when the connecting plates 10a, 10b, and 10c are stacked. As shown in FIG. 3(a), in the up-down direction, all of the terminals 12 are located between a top end of the uppermost annular body 11 and a bottom end of the lowermost annual body 11. In other words, the thickness of each terminal 12 is equal to or smaller than the total thickness of all of the annular bodies 11 and do not protrude above or below the annular bodies 11. As shown in FIG. 2, the terminals 12 are located at intervals in a circumferential direction. Each terminal 12 is connected to the winding wire 9.

As shown in FIG. 3(a), each terminal 12 is L-shaped. FIG. 3(b) is a view of the terminal 12 as seen in a direction B in FIG. 3(a). FIG. 3(c) is a view of the terminal 12 as seen in a direction of C in FIG. 3(a). At a tip of the terminal 12, a first piece 14a and a second piece 14b are provided facing each other to define a groove 13 therebetween. The groove 13 extends in the up-down direction. The winding wire 9 is inserted into the groove 13. The pieces 14a and 14b are pressurized in directions so as to approach each other, and as a result, the winding wire 9 is held between the pieces 14a and 14b. As described in detail below, the winding wire 9 is connected to the pieces 14a and 14b by fusing.

As shown in FIG. 1, the connecting plates 10a, 10b, and 10c are provided with a terminal 20. The terminal 20 is connected to a power supply line, which is supplied with an electric current from a battery (not shown). The housing main body 5a includes a second opening 5d for allowing the terminal 20 or the power supply line to pass therethrough. The current supplied to the power supply line is supplied to the winding wire 9 via the connecting plates 10a, 10b, and 10c.

As shown in FIG. 1, the first opening 5c of the housing main body 5a is located at a top side of the stator core 6 (to the lateral side of a top portion of the stator core 6, or above the stator core 6), and the second opening 5d is located at a bottom side of the stator core 6 (to the lateral side of a bottom portion of the stator core 6, or below the stator core 6). In other words, in the axial direction of the rotating shaft 2, the first opening 5c is located on one side of the stator core 6 and the second opening 5d is located on the opposite side to the first opening 5c.

The connecting plates 10 are located below the stator core 6. The connecting plates 10 are located on the opposite side to the first opening 5c with respect to the stator core 6 in the axial direction of the rotating shaft 2.

The stator 4 is fit to the housing main body 5a through the first opening 5c. An inner diameter D1 of the first opening 5c is equal to or larger than an outer diameter of the stator 4. Since the connecting plates 10 have the terminals 12 arranged at intervals in the circumferential direction, an outer diameter D3 of the connecting plates 10 varies in accordance with their position. A maximum value of the outer diameter D3 of the connecting plates 10 is equal to or smaller than an outer diameter of the stator core 6 so that the connecting plates 10 do not protrude outward, in the radial direction, beyond the stator core 6. The inner diameter D1 of the first opening 5c is equal to or larger than the outer diameter of the stator core 6.

Now, a method for assembling the motor 1 will be described. First, the stator 4, including the stator core 6, the winding wire 9 and the connecting plates 10, which are already assembled, is inserted and thus attached to the housing main body 5a through the first opening 5c. The inner diameter of the housing main body 5a is slightly larger than the outer diameter of the stator core 6, whereas the maximum value of the outer diameter D3 of the connecting plates 10 is equal to or smaller than the outer diameter of the stator core 6. During the insertion of the stator 4 into the housing main body 5a, it is unlikely that the connecting plates 10 are stuck with an edge of the first opening 5c. The connecting plates 10 are inserted into the housing main body 5a easily.

As described above, the winding wire 9 is connected to each terminal 12 of the connecting plates 10 by fusing. For fusing, the winding wire 9 is held between the first piece 14a and the second piece 14b of the terminal 12 (see FIG. 3(c)), the first piece 14a and the second piece 14b are pressurized by electrodes (not shown) in directions so as to approach each other, and an electric current is caused to flow to the pieces 14a and 14b.

As can be seen, for fusing, the electrodes need to be pressed against the terminal 12. If the electrodes are to be pressed against a top surface and a bottom surface of the terminal 12, a space to accommodate the electrodes is required above and below the terminal 12. However, in the motor 1 in the present embodiment, as shown in FIGS. 3(b) and 3(c), the terminal 12 includes the groove 13 extending in the up-down direction. Fusing can be performed by pressurizing the first piece 14a and the second piece 14b from the left and from the right each by an electrode. As shown in FIG. 2, there is a space 18 between each two adjacent terminals 12. By inserting the electrodes into the spaces 18, the terminal 12 can be pressurized from both of the lateral sides while the current is caused to flow. Therefore, there is no need to provide an extra space between the terminals 12 and the stator core 6, which helps to reduce the size of the motor 1.

Next, the power supply line is connected to the terminals 20 of the connecting plates 10. The work of connecting the power supply line to the terminals 20 may be performed before the work of connecting the winding wire 9 to the terminals 12 of the connecting plates 10.

Next, the rotor 3 including the rotating shaft 2 secured thereto is inserted into the housing main body 5a through the first opening 5a and located inside the stator 4. The rotating shaft 2 is supported by the bearing 8a.

Next, the cover 5b is attached to the housing main body 5a such that a tip of the rotating shaft 2 is supported by the bearing 8b. As a result, the first opening 5c of the housing main body 5a is covered.

As described above, in the motor 1 in the present embodiment, the connecting plates 10 are located below the stator core 6. In other words, the connecting plates 10 are located on the opposite side to the first opening 5a with respect to the stator core 6. During the assembly of the motor 1, it is not necessary to have the rotor 3 pass through the hole 19 of the connecting plates 10. Therefore, an inner diameter D4 of the connecting plates 10 can be made smaller than in a conventional motor. In the present embodiment, the inner diameter D4 of the connecting plates 10 is smaller than an outer diameter D2 of the rotor 3. Accordingly, the connecting plates 10 are allowed to have a sufficient current capacity with certainty with no need to increase the thickness or the outer diameter of the connecting plates 10. A sufficient current capacity of the connecting plates 10 can be obtained with certainty with no increase in the size of the motor 1.

As shown in FIG. 3(a), each terminal 12 of the connecting plates 10 is located between the top end of the uppermost annular body 11 and the bottom end of the lowermost annual body 11, and the terminals 12 do not protrude above or below all of the annular bodies 11. Since the terminals 12 do not protrude above or below all of the annular bodies 11, the thickness of the connecting plates 10 can be suppressed small. The motor 1 (more strictly, the stator 4 of the motor 1) can be reduced in size in the axial direction of the rotating shaft 2.

As shown in FIG. 3(a), the terminals 12 are provided outward, in the radial direction, of the annular bodies 11. As shown in FIG. 3(b), each terminal 12 includes the first piece 14a and the second piece 14b facing each other defining the groove 13 therebetween, the groove 13 extending in the up-down direction. As shown in FIG. 3(c), the winding wire 9 is held between the first piece 14a and the second piece 14b. For fusing, the first piece 14a and the second piece 14b are pressurized from the lateral sides (from above and below in FIG. 3(c)) by electrodes and the current is caused to flow. Since the terminals 12 are provided outward, in the radial direction, of the annular bodies 11, the work of fusing is easy. Fusing can be performed by inserting the electrodes into the spaces 18 (see FIG. 2) between adjacent terminals 12 and pressing the electrodes against the first piece 14a and the second piece 14b. No extra space to accommodate the electrodes is needed above or below the terminal 12 in the axial direction, especially between the terminal 12 and the stator core 6. Therefore, the motor 1 can be reduced in size in the axial direction.

### Reference Signs List

- 1: Motor
- 2: Rotating shaft
- 3: Rotor
- 4: Stator
- 5: Housing
- 5a: Housing main body
- 5b: Cover
- 5c: First opening
- 5d: Second opening
- 6: Stator core
- 7: Coil
- 9: Winding wire
- 10: Connecting plates
- 10a, 10b, 10c: Connecting plate
- 11: Annular body
- 12: Terminal
- 13: Groove
- 14a: First piece
- 14b: Second piece
- 20: Terminal connected to the power supply line

## Claims

1. A motor comprising:
a rotating shaft;
a rotor secured to the rotating shaft;
a stator including a tubular stator core located around the rotor, a coil formed by a winding wire wound around the stator core, and a substantially annular connecting plate located on one side with respect to the stator core in an axial direction of the rotating shaft and connected to a power supply line for supplying an electric current to the winding wire; and
a housing for accommodating the rotating shaft, the rotor, and the stator, the housing including a first opening on the opposite side to the connecting plate in the axial direction of the rotating shaft, the first opening having an inner diameter equal to or larger than an outer diameter of the stator; wherein
a maximum value of an outer diameter of the connecting plate is equal to or smaller than an outer diameter of the stator core.

2. A motor according to claim 1, wherein an inner diameter of the connecting plate is smaller than an outer diameter of the rotor.

3. A motor according to claim 1, wherein the housing includes a second opening on the opposite side to the first opening in the axial direction of the rotating shaft, the second opening allowing the power supply line or a terminal provided to the connecting plate and connected to the power supply line to pass therethrough.

4. A motor according to claim 1, wherein:
a plurality of the connecting plates are provided;
the connecting plates each include an annular body and a terminal connected to the winding wire;
the annular bodies of the plurality of connecting plates are stacked in the axial direction of the rotating shaft to define a stacked body; and
in the axial direction of the rotating shaft, the terminals are located between one of two ends of the stacked body and the other end of the stacked body in the axial direction of the rotating shaft.

5. A motor according to claim 4, wherein the terminals are located outward, in a radial direction, of the annular bodies.

6. A motor according to claim 5, wherein:
the terminals each include a first piece and a second piece facing each other to define a groove therebetween, the groove extending parallel to the axial direction of the rotating shaft; and
the winding wire is held between the first piece and the second piece.
